# FASCICULE DE BREVET EUROPEEN

(11) **EP 0 733 245 B1**
(45) Date de publication et mention de la délivrance du brevet: **30.07.1997**
(21) Numéro de dépôt: 95903372.1
(22) Date de dépôt: 06.12.1994
(51) Int. Cl.: G06K 19/073

(54) **CARTE A MEMOIRE ET PROCEDE DE FONCTIONNEMENT**
SPEICHERKARTE UND VERFAHREN ZUM BETRIEB
MEMORY CARD AND OPERATION METHOD

(30) Priorité: 07.12.1993 FR 9314668
(43) Date de publication de la demande: 25.09.1996
(73) Titulaire: GEMPLUS CARD INTERNATIONAL, F-13420 Gémenos (FR)
(72) Inventeur: COULIER, Charles, F-13360 Roquevaire (FR); GORDONS, Edouard, F-13400 Aubagne (FR); GRIMONPREZ, Georges, F-59650 Villeneuve-d'Ascq (FR)
(74) Mandataire: Schmit, Christian Norbert Marie
(86) Numéro de dépôt international: FR9401420
(87) Numéro de publication internationale: WO9516246

(56) Documents cités:
- EP-A- 0 540 095
- FR-A- 2 612 316
- US-A- 4 816 654

## Description

L'invention concerne les cartes portatives à circuit intégré, également connues sous le nom de cartes à puces, et elle concerne plus particulièrement les cartes qui comportent à la fois une mémoire et un microprocesseur pour exécuter des programmes d'application contenus dans la mémoire. A titre d'exemple un programme d'application est un programme de transaction monétaire pour une carte destinée à une application bancaire.

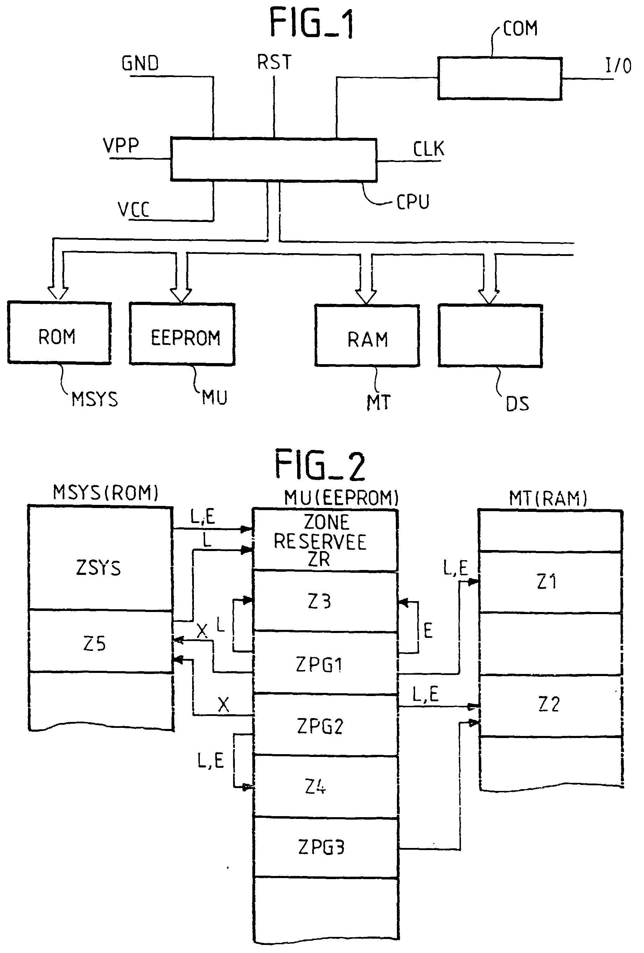

L'architecture générale de la puce de circuit intégré contenue dans la carte est le plus souvent du type représenté à la figure 1. Le microprocesseur est désigné par la référence CPU et il est connecté à un bus de liaison, lequel est relié par ailleurs aux mémoires de la carte. Ces mémoires peuvent être de différents types et le plus souvent des mémoires de différents types sont présentes simultanément dans le circuit intégré. En particulier, il peut y avoir une mémoire morte (ROM) MSYS pour contenir notamment les programmes fixes constituant le système d'exploitation général de la carte; une mémoire MU non volatile, programmable électriquement (EPROM) et éventuellement effaçable électriquement (EEPROM), pour contenir par exemple des programmes applicatifs et des données à conserver d'une session d'utilisation à une autre; et enfin une mémoire volatile MT de travail (RAM) contenant des données et des portions de programmes utiles pendant l'exécution des programmes applicatifs mais qui ne sont pas conservés lorsque la carte n'est pas utilisée.

Le circuit intégré comporte encore un circuit COM pour la communication (en général série) entre le microprocesseur et une borne d'entrée/sortie I/O du circuit intégré, en vue d'échanges avec l'extérieur de la carte à puce. Les autres bornes du circuit intégré peuvent être classiquement des bornes d'alimentation (VCC, GND), une borne d'horloge (CLK), une borne d'initialisation (RST), etc. Les fonctions des bornes présentes dépendent des protocoles de communication utilisés.

L'architecture générale du circuit intégré peut encore comporter des dispositifs de sécurité DS.

Les différentes mémoires peuvent, sous certaines réserves indiquées ci-après, être accessibles par le microprocesseur CPU pour effectuer des opérations de
- lecture du contenu d'une adresse déterminée
- écriture à une adresse déterminée
- exécution par le microprocesseur de la carte
d'une instruction contenue à une adresse déterminée.

La mémoire morte MSYS peut être appelée mémoire de système en raison des programmes de fonctionnement fondamentaux qu'elle contient, auxquels tous les programmes d'application quels qu'ils soient doivent faire appel pour que la carte fonctionne. C'est le noyau central logiciel de la carte. Il est immuable, et c'est pourquoi il est réalisé dans une technologie de mémoire morte non modifiable. Les informations et programmes qu'elle contient sont de type confidentiel (le plus souvent, le fabricant de la puce ne souhaite pas que les programmes du système d'exploitation de la carte soient connus). Cette mémoire n'est donc pas du tout accessible en écriture, et on souhaite qu'elle ne le soit pas en lecture non plus. Elle est bien entendu accessible en "exécution" d'instructions.

La mémoire non volatile MU contient des données et des programmes modifiables. On peut l'appeler "mémoire utilisateur" du fait qu'elle contient des données et programmes spécifiques d'une application qui intéresse l'utilisateur. Mais les données qu'elles contient sont de nature plus ou moins confidentielle, et c'est pourquoi on souhaite le plus souvent diviser cette mémoire en zones d'accès plus ou moins réservé : zones accessibles en écriture mais pas en lecture, ou accessibles en lecture mais pas en écriture, ou encore zones complètement accessibles ou complètement inaccessibles. De plus certaines zones doivent pouvoir contenir des instructions de programme exécutables par le microprocesseur de la carte tandis que d'autres zones ne doivent pas pouvoir contenir de telles instructions.

La mémoire de travail MT contient des données provisoires, qui peuvent résulter de l'exécution des programmes du système d'exploitation ou des programmes d'application. En règle générale, toutes les zones de la mémoire de travail sont accessibles en lecture, en écriture, et en exécution.

Les différentes mémoires de la carte à puce nécessitent donc des autorisations d'accès différentes les unes des autres.

Pour contrôler ces différentes autorisations d'accès, certains circuits de carte à puce sont équipés d'une "matrice de sécurité" (voir par exemple EP-A-0 540 095) : il s'agit d'un circuit de protection qui contrôle l'accès à telle ou telle zone de mémoire en fonction de l'opération demandée (lecture, écriture, exécution d'instruction). Ce circuit reçoit l'adresse à laquelle doit être effectuée l'opération, et fournit un signal d'autorisation ou interdiction d'exécution de l'opération demandée.

En règle générale, cette matrice de sécurité interdit les accès (pour une opération demandée) sur toute la mémoire considérée, mais on peut imaginer que cette matrice soit plus complexe et interdise ou autorise l'opération pour des zones limitées de la mémoire considérée. Ceci est de plus en plus vrai avec l'augmentation des tailles de mémoire utilisateur.

L'avantage d'un tel dispositif est d'interdire la lecture d'un système d'exploitation (développé par le fabricant de la carte) par un programme applicatif s'exécutant dans la mémoire utilisateur MU (programme développé par un gestionnaire d'application : par exemple une banque dans le cas d'une carte bancaire). De même, on peut interdire la lecture par l'utilisateur de programmes développés par le gestionnaire de l'application.

La matrice de sécurité, lorsqu'elle existe, a l'inconvénient d'être fixée une fois pour toutes. Si elle ne l'était pas il y aurait des risques de contournement des interdictions d'accès qu'elle établit.

On notera qu'il n'y a pas, dans la mémoire de travail MT, de zone réservée aux besoins du système d'exploitation et de zone réservée aux besoins des programmes applicatifs : la mémoire de travail contient des données mélangées issues des deux types de programme, ce qui est un inconvénient pour la sécurité des données du système d'exploitation.

Par ailleurs, les circuits non équipés de matrice de sécurité sont fragiles face à des attaques malveillantes. La lecture du contenu de la mémoire morte (système d'exploitation) peut être faite avant l'étape de personnalisation de la carte par des données personnelles d'application, si des précautions importantes ne sont pas prises. Il suffit en effet à ce stade de placer dans la mémoire utilisateur un programme de lecture systématique du contenu de la mémoire morte et de transfert de ce contenu à l'extérieur du circuit.

Actuellement, les systèmes d'exploitation constituent un ensemble de traitements dédiés à certaines application (exemple : carte bancaire, ou carte de radiotéléphone) et ayant pour fonction de faciliter le développement ainsi que l'exécution de programmes d'application spécifiques. Les concepteurs de ces programmes d'application (de plus en plus nombreux) ont des exigences de plus en plus pointues en termes de fonctionnalité de la carte. Il faut alors développer, autour d'un système d'exploitation figé, les fonctionnalités souhaitées; ces fonctionnalités sont placées en mémoire utilisateur. Les programmes qui apportent ces fonctionnalités sont des ajouts fonctionnels au système de base et ne doivent pas interférer avec les structures de données gérées par le système d'exploitation.

Les développements spécifiques futurs vont probablement requérir de plus en plus une plus large ouverture des systèmes d'exploitation, une séparation claire entre le système d'exploitation et les programmes applicatifs, et une protection adaptable et efficace des programmes et des données propres à chaque programme.

De manière générale, l'invention a pour but de proposer des cartes à mémoire à microprocesseur présentant une bonne sécurité contre les tentatives d'accès indésirables à certaines parties de mémoire, et une large souplesse dans la gestion de cette sécurité.

Elle permet en outre d'être mise en oeuvre à partir de micro-circuits existant sans aucune modification matérielle de ces microcircuits car les modifications d'un circuit entraînent des coûts de fabrication important.

Selon l'invention, on propose une carte à mémoire à microprocesseur, comportant au moins une mémoire morte de système contenant des programmes d'un système d'exploitation, et une mémoire utilisateur non volatile contenant des données et programmes relatifs à au moins une application de la carte à mémoire, dans laquelle la mémoire morte ou la mémoire utilisateur comporte un programme interpréteur pour l'exécution des instructions d'accès mémoire des programmes d'application, et, à cet effet, les instructions d'accès à une adresse désirée d'une des mémoires de la carte, instructions présentes dans un programme d'application de la mémoire utilisateur, sont de type interprétable et non exécutable directement, et sont aptes à déclencher l'exécution par l'interpréteur d'un sous-programme d'interprétation comportant : examen d'une zone de contrôle dans la mémoire utilisateur, cette zone définissant pour les programmes d'application les autorisations d'accès aux différentes mémoires et le type d'accès autorisé, comparaison entre l'instruction d'accès demandée pour une adresse déterminée et l'autorisation correspondante donnée dans la zone de contrôle, et exécution de l'instruction d'accès uniquement si l'autorisation existe pour le type d'accès demandé et pour l'adresse demandée.

Certaines instructions du système d'exploitation lui-même pourraient être interprétées par le programme interpréteur.

En résumé par conséquent, un programme nommé "interpréteur", de préférence en mémoire morte mais pouvant éventuellement être en mémoire utilisateur, interprète obligatoirement les instructions d'accès à n'importe quelle mémoire (système, utilisateur, travail) de sorte que le programme d'application ne peut pas accéder à ces adresses sans un contrôle exercé par le programme interpréteur.

Il en résulte d'abord que l'accès en lecture des programmes sera très facilement protégé : l'interpréteur pourra facilement interdire d'écrire dans la zone de contrôle des autorisations d'accès à des zones de mémoire système.

De plus, les programmes d'application pourront eux-mêmes protéger leur fonctionnement, de sorte que si plusieurs programmes d'application sont présents, des zones de mémoire pourront leur être réservées de manière qu'il n'y ait pas d'interférence, que ce soit en lecture, en écriture ou en exécution, entre les différents programmes.

Par conséquent, l'invention propose également un procédé de fonctionnement de carte à mémoire à microprocesseur, pour exécuter des programmes d'application contenus dans une mémoire utilisateur en utilisant les programmes de système d'exploitation contenus dans une mémoire morte de système, par lequel toute instruction d'accès à une des mémoires de la carte, instruction contenue dans un programme d'application en mémoire utilisateur, est interprétée par un sous-programme d'interprétation contenu dans la mémoire morte de système ou dans la mémoire utilisateur, ce sous-programme effectuant un contrôle d'accès selon l'instruction demandée, à partir de données d'autorisation d'accès contenues au moins en partie dans une zone réservée de la mémoire utilisateur, et le sous programme effectuant ensuite l'accès uniquement si les données d'autorisation comportent une autorisation d'accès correspondant au type d'accès demandé et à l'adresse demandée.

Parmi les avantages de l'invention, il y a la possibilité de permettre un partage des ressources mémoires entre plusieurs programmes résidants (exécutés dans une même session), ce partage étant parfaitement contrôlé par le programme interpréteur.

D'autres caractéristiques et avantages de l'invention apparaîtront à la lecture de la description détaille qui suit et qui est faite en référence aux dessins annexés dans lesquels :
- la figure 1, déjà décrite, représente la structure générale d'un circuit intégré de carte à mémoire à microprocesseur;
- la figure 2 représente l'organisation générale des mémoires dans un exemple de mise en oeuvre de l'invention;
- la figure 3 représente une table d'autorisations d'accès contenue dans la zone réservée de la mémoire utilisateur.

On rappelle la différence entre une instruction exécutable et une instruction interprétable : l'instruction exécutable est un code logique fourni au microprocesseur et qui commande directement les divers circuits et registres du microprocesseur. L'instruction interprétable est une instruction pilotée par un programme interpréteur, qui, tout comme un processeur, lit l'instruction courante, la décode, puis l'exécute. Le programme interpréteur peut effectuer ces trois actions sur toutes les instructions de langage interprétable.

Selon l'invention, on verra que les programmes d'application présents dans la mémoire utilisateur non volatile sont écrits dans un langage interprétable, l'interpréteur étant de préférence dans la mémoire morte de système.

La première étape de mise en oeuvre de l'invention consiste à définir, pour chaque programme utilisateur, les zones d'accès à contrôler. Par exemple, ce programme aura la possibilité d'accéder en lecture à telles zones de mémoire, en écriture à telles autres, et en exécution à telles autres encore. On constitue ainsi, pour ce programme une sorte de "matrice de sécurité", mais cette matrice n'est pas du tout figée et n'est pas physiquement présente autrement que sous la forme d'une zone de mémoire réservée dans la mémoire utilisateur. Le contenu de cette zone est modifiable, mais la zone est en principe à un emplacement fixe.

La mémoire utilisateur comportera donc d'une part des zones de programmes d'application, et d'autre part une zone réservée de contrôle d'accès.

Lorsque le programme d'application sera chargé dans la mémoire utilisateur (inscription en mémoire non volatile EPROM ou EEPROM), le chargement sera fait bien entendu par l'intermédiaire du système d'exploitation.

Un programme de chargement est donc prévu dans le système d'exploitation. En pratique il s'agit d'un programme de chargement et déchargement puisqu'il peut être nécessaire aussi de supprimer des programmes anciens qui ne sont plus utiles (remplacement d'une version d'une application par une version mise à jour).

Le programme de chargement a pour fonction
- d'écrire le programme d'application dans une zone de mémoire utilisateur,
- et d'écrire dans la zone réservée de contrôle d'accès des informations relatives aux différentes autorisations d'accès souhaitées pendant l'exécution du programme d'application chargé.

Le contenu de cette zone d'accès dépend en partie du programme d'application chargé : en fonction des besoins de ce programme des autorisations d'accès diverses pourront être établies. Mais il dépend aussi du système d'exploitation : il n'est pas question que le programme d'application indique qu'il a besoin de lire ou écrire dans la mémoire de système.

Etant donné que le programme de chargement fait partie du système d'exploitation en mémoire morte, on comprend que ce programme établira lui-même les interdictions de plus haut niveau : interdiction absolue de lire le contenu de la mémoire de système d'exploitation; interdiction d'écrire dans la zone réservée elle-même sauf pendant le déroulement du programme de chargement ou déchargement (ce déroulement étant repéré par l'état du compteur ordinal du système d'exploitation et cet état pouvant constituer un des éléments constitutifs des autorisations d'accès).

L'activation du programme de chargement ou déchargement est de préférence soumis à la condition de présentation d'un code d'habilitation secret autorisant sa mise en oeuvre. La vérification du code est effectuée par une routine du système d'exploitation en mémoire morte.

Le programme de chargement écrit donc le programme d'application dans les zones de programme de la mémoire utilisateur, et les autorisations d'accès dans une zone réservée de cette même mémoire. Le programme de déchargement efface les zones de programme et modifie le contenu de la zone réservée.

La zone réservée est de préférence un emplacement précis de la mémoire utilisateur, toujours le même puisque c'est le système d'exploitation figé de la carte qui doit savoir où elle est et quelle est sa longueur pour pouvoir l'explorer lors de l'utilisation.

Les autorisations d'accès installées dans cette zone réservée peuvent être regroupées en fonction des programmes qui nécessitent les contrôles d'accès. Par exemple, on peut rencontrer successivement dans la zone réservée les autorisations relatives au système d'exploitation, puis celles relatives à un premier programme d'application PG1, puis celles d'un deuxième programme d'application PG2, etc.

La figure 2 représente l'organisation générale des mémoires de la carte. A titre d'exemple, on a représenté dans la mémoire de travail MT diverses zones telles qu'une zone Z1 et une zone Z2. Dans la mémoire utilisateur MU, on a représenté une zone réservée ZR, des zones contenant des programmes d'application, ZPG1, ZPG2, ZPG3, et diverses autres zones, par exemple Z3, Z4. Enfin, dans la mémoire morte (désignée par ROM) on a représenté une zone ZSYS pour le système d'exploitation, et d'autres zones de mémoire morte telles qu'une zone Z5.

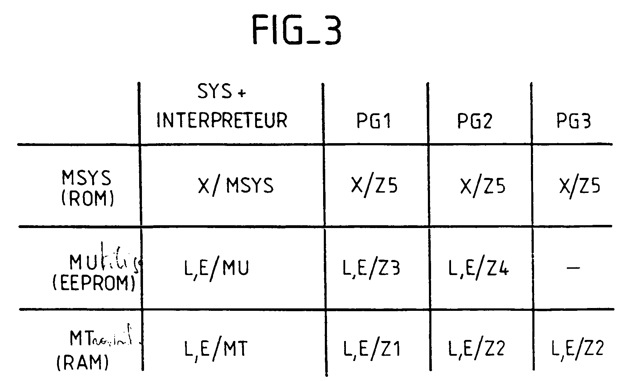

La figure 3 représente un exemple de structure générale de la zone réservée, en relation avec les zones de mémoire définies à la figure précédente. En ligne sont indiquées les différentes mémoires : MSYS pour la mémoire morte de système, MU pour la mémoire utilisateur, MT pour la mémoire de travail. En colonnes sont indiqués les différents programmes concernés : SYS, INTERPRETEUR pour le système d'exploitation, incluant les programmes de chargement déchargement et les programmes d'interprétation des instructions d'accès, PG1, PG2, PG3 pour les programmes applicatifs différents. Enfin, dans le tableau au croisement d'une ligne et d'une colonne, on a indiqué les accès autorisés, sous forme d'une nature d'accès autorisée (L pour lecture, E pour écriture, X pour exécution d'instruction) et d'une zone (ou plusieurs) pour laquelle cette nature d'accès est autorisée lors du déroulement d'un programme déterminé.

Par exemple, (L,E)/Z3 au carrefour de la ligne MU et de la colonne PG1, signifie que lors de l'exécution du programme PG1, la zone Z3 de la mémoire utilisateur est accessible en lecture et en écriture. L'indication (L,E)/MU au carrefour de la ligne MU et de la colonne SYS signifie que pour l'exécution des programmes du système, toute la mémoire utilisateur MU est accessible en lecture et en écriture. On comprendra que le tableau de cette figure 3 pourrait être beaucoup plus détaillé et complexe que l'exemple simple donné. Par exemple, on peut prévoir que la colonne SYS est divisée en plusieurs colonnes avec des accès différents : l'accès en écriture dans la zone réservée ZR peut n'être autorisé que pour l'exécution des programmes de chargement/déchargement contenus dans une partie seulement de la mémoire ROM.

Le programme PG1, dont l'exécution est initiée par le système peut par exemple lire et écrire dans les zones Z1 et Z3 de la mémoire RAM et la mémoire MU respectivement, et il peut exécuter directement des instructions contenues dans la zone Z5 de la mémoire ROM. Cette zone Z5 contient par exemple des routines diverses mises à la disposition des programmes d'application (routines de communication, algorithmes divers,...). L'accès à ces routines est entièrement contrôlé par l'interpréteur d'instructions d'accès contenu dans la mémoire ROM, ceci grâce aux indications fournies dans la zone réservée ZR.

On notera que le tableau des accès peut fonctionner de manière transitive, c'est-à-dire que si le programme PG1 a une autorisation d'exécuter le programme PG2, donc l'autorisation d'exécuter (X) sous contrôle de l'interpréteur toutes les instructions contenues dans la zone de programme PG2, alors il a pendant cette exécution les mêmes autorisations d'accès que le programme PG2.

L'interpréteur d'instructions d'accès, qui fait partie du système d'exploitation et qui utilise le contenu de la zone réservée, constitue une interface logicielle incontournable entre les programmes applicatifs et le matériel. Par conséquent, on peut parfaitement maîtriser tous les accès en lecture écriture et exécution de toutes les parties de mémoire (morte, non volatile ou volatile).
Les programmes applicatifs, et surtout celles des instructions de programme qui sont des instructions d'accès en mémoire, sont établis dans un langage interprétable dont les instructions sont un peu analogues à celles des microprocesseurs.

A chaque instruction d'accès en lecture ou écriture, l'interpréteur se positionne dans la zone réservée. Il balaye les valeurs de cette zone en contrôlant la validité de l'accès pour l'instruction en cours d'exécution et pour le programme considéré. Dans le cas de tentative de violation d'accès, l'interpréteur établit des instructions d'erreur dont la fonction (indication d'erreur, message, blocage de fonctionnement, suppression d'habilitation, etc.) peut varier en fonction de la gravité de la tentative de violation.

On notera que l'interpréteur tient compte des indications d'indirection d'adresse éventuellement impliquées par l'instruction d'accès demandée. De plus, l'interpréteur est de préférence conçu de manière à détecter du code non exécutable. S'il trouve du code non exécutable, il peut, par précaution, arrêter l'exécution du programme en cours.

L'exemple qui suit permettra de mieux comprendre les principes de mise en oeuvre de l'invention. On suppose que l'instruction d'accès demandé est une instruction de transfert, vers un pseudo-registre R0, d'un mot de deux octets dont le premier est pointé dans l'espace mémoire par un autre pseudo-registre R7. Le code mnémonique de cette instructions pourrait être par exemple : MOV.W(R7),R0.

Supposons que le contenu du registre R7 soit une adresse 1000. Le mot à transférer est donc le mot constitué par la combinaison des octets contenus aux adresses 1000 et 1001 de la mémoire. Ces adresses correspondent par exemple à une portion de la mémoire utilisateur, mais ce pourrait être la mémoire morte ou la mémoire de travail.

L'instruction interprétable MOV pointe alors vers une routine de l'interpréteur, à une adresse prédéterminée de la mémoire morte MSYS. Cette routine est une routine d'instructions exécutables; elle commence par explorer la zone de mémoire réservée ZR pour voir si l'accès en lecture des adresses 1000 et 1001 est autorisé pour le programme en cours d'exécution. Si oui, elle exécute le travail en plaçant le mot lu dans le pseudo-registre R0; sinon, elle interrompt le déroulement de l'instruction. Les opérations qui doivent suivre en cas d'interruption sont préprogrammées dans la mémoire de système. Elles peuvent consister en des messages d'erreur et retour à d'autres routines.

Un autre exemple peut être donné : l'instruction d'accès demandé est une instruction de transfert, vers une adresse de mémoire pointée par un pseudo-registre R0, d'un mot de deux octets dont le premier est pointé par le pseudo-registre R7. Le code mnémonique de cette instructions pourrait être par exemple : MOV.W(R7),(R0).

Si le contenu du registre R7 est une adresse 1000, le mot à transférer est encore le mot constitué par la combinaison des octets contenus aux adresses 1000 et 1001 de la mémoire. L'interpréteur vérifie comme précédemment que l'accès en lecture est autorisé pour les adresses 1000 et 1001 pour le programme exécuté. Mais il vérifie aussi que l'adresse contenue dans le registre R0 est une adresse autorisée en écriture.

Pour le bon fonctionnement du procédé, on comprendra qu'il est souhaitable que l'interpréteur sache à tout moment s'il exécute un programme applicatif (et en principe il doit même savoir lequel est précisément en cours d'exécution) ou le programme chargeur/déchargeur qui seul est habilité à une inscription dans la zone réservée.

La lecture du compteur ordinal du microprocesseur doit permettre de déterminer quel est le programme en cours. Par exemple, lorsque l'état du compteur ordinal correspond à l'exécution du programme de chargement, on rend accessible toutes les adresses de la mémoire utilisateur, rendant possible une écriture de programme dans cette mémoire et une écriture des données d'accès dans la zone réservée ZR.

La zone réservée peut contenir des informations du type "adresse de chargement du programme applicatif", c'est-à-dire adresse de la première instruction de ce programme; elle peut contenir aussi une donnée de longueur (nombre d'instructions) du programme.

Viennent ensuite les déclarations de zones utilisables par ce programme, en lecture, écriture et exécution. Bien entendu, le programme de chargement, à l'aide duquel on va mettre à jour la zone réservée, vérifie que les zones déclarées accessibles par le programme applicatif ne comportent pas la zone réservée elle-même. Faute de quoi la lecture ou la modification du contenu de cette zone resterait possible à partir d'un programme applicatif.

Lors de la mise à jour de la zone réservée, on peut envisager de contrôler le contenu des déclarations données par l'autorité (celle qui gère les chargements de programmes d'application), pour interdire des interactions entre programmes d'application différents.

C'est dans ce cas l'interpréteur qui effectue un contrôle complet du contenu de la zone réservée lors de sa mise à jour. Il est d'ailleurs souhaitable de faire gérer, par une autorité qui en a la charge, le chargement de tous les programmes applicatifs.

On peut enfin imaginer que la zone réservée contient aussi des indications autres que relatives à l'accès de tel ou tel espace de mémoire. Par exemple, cette zone peut contenir des informations relatives à des interruptions de programme de type matériel. Ainsi, par exemple, le programme PG1 peut être interrompu par les interruptions matérielles I1 et I2, mais pas par d'autres types d'interruptions. On comprend qu'on augmente encore la souplesse de fonctionnement des programmes applicatifs : on n'est pas obligé de prévoir systématiquement les mêmes interruptions matérielles pour tous les programmes applicatifs.

Si l'interpréteur contient des routines de programmes de bas niveau, on peut concevoir que la zone réservée contient des informations sur les routines dont l'utilisation est autorisée et celles dont l'utilisation n'est pas autorisée.

Bien entendu, il est possible de remplir la zone réservée en spécifiant les zones de mémoire autorisées pour tel ou tel accès, ou au contraire en spécifiant les zones interdites.

## Revendications

1. Carte à mémoire à microprocesseur, comportant au moins une mémoire morte de système (MSYS) contenant des programmes d'un système d'exploitation, et une mémoire utilisateur non volatile (MU) contenant des données et programmes (PG1-PG3) relatifs à au moins une application de la carte à mémoire, dans laquelle la mémoire morte ou la mémoire utilisateur contient un programme interpréteur pour l'exécution des instructions d'accès mémoire des programmes d'application, et, à cet effet, les instructions d'accès à une adresse désirée d'une des mémoires de la carte, instructions présentes dans un programme d'application de la mémoire utilisateur, sont de type interprétable et non exécutable directement, et sont aptes à déclencher l'exécution par l'interpréteur d'un sous-programme d'interprétation comportant : examen d'une zone de contrôle (ZR) dans la mémoire utilisateur, cette zone définissant pour les programmes d'application les autorisations d'accès aux différentes mémoires et le type d'accès autorisés, comparaison entre l'instruction d'accès demandée pour une adresse déterminée et l'autorisation correspondante donnée dans la zone de contrôle (ZR), et exécution de l'instruction d'accès uniquement si l'autorisation existe pour le type d'accès demandé et pour l'adresse demandée.

2. Carte à mémoire selon la revendication 1, caractérisée en ce que la zone de contrôle contient des autorisations d'accès distinctes pour plusieurs zones différentes à l'intérieur de chaque mémoire.

3. Carte à mémoire selon l'une des revendications 1 et 2, caractérisée en ce que le système d'exploitation contient un programme de chargement de programmes d'application, ce programme étant apte à écrire dans la mémoire utilisateur (MU), en dehors de la zone de contrôle, un nouveau programme d'application et à écrire dans la zone de contrôle (ZR) des données représentant des autorisations d'accès aux différentes mémoires pendant l'exécution du programme d'application.

4. Carte à mémoire selon l'une des revendications précédentes, caractérisée en ce que les autorisations d'accès comportent des autorisations de lecture, d'écriture, et/ou d'exécution.

5. Carte à mémoire selon l'une des revendications précédentes, caractérisé en ce que les données d'autorisation contenues dans la zone de contrôle comportent une interdiction d'écrire dans la zone réservée lors de l'exécution d'un programme d'application présent dans la mémoire utilisateur.

6. Procédé de fonctionnement de carte à mémoire à microprocesseur, pour exécuter des programmes d'application (PG1, PG2, PG3) contenus dans une mémoire utilisateur (MU) en utilisant les programmes de système d'exploitation (SYS) contenus dans une mémoire morte de système (MSYS), par lequel toute instruction d'accès à une des mémoires (MSYS, MU, MT) de la carte, instruction contenue dans un programme d'application en mémoire utilisateur (MU), est interprétée par un sous-programme d'interprétation contenu dans la mémoire morte de système (MSYS) ou dans la mémoire utilisateur, ce sous-programme effectuant un contrôle d'accès selon l'instruction demandée, à partir de données d'autorisation d'accès contenues au moins en partie dans une zone réservée (ZR) de la mémoire utilisateur, et le sous programme effectuant ensuite l'accès uniquement si les données d'autorisation comportent une autorisation d'accès correspondant au type d'accès demandé et à l'adresse demandée.

7. Procédé selon la revendication 6, caractérisé en ce que l'on charge un programme d'application dans la mémoire utilisateur en dehors de la zone de contrôle à l'aide d'un programme de chargement contenu dans la mémoire morte de système, et que l'on modifie les données de la zone de contrôle à partir du programme de chargement pour y inclure des données d'autorisations relatives au programme d'application.

8. Procédé selon la revendication 7, caractérisé en ce que les données de la zone de contrôle empêchent l'inscription dans la zone de contrôle de données autorisant une écriture dans la zone de contrôle pendant l'exécution d'un programme d'application chargé dans la mémoire utilisateur.

## Patentansprüche

1. Mikroprozessor-Speicherkarte, mit wenigstens einem System-Festwertspeicher (MSYS), der Programme eines Betriebssystems enthält, und einem nichtflüchtigen Anwenderspeicher (MU), der Daten und Programme (PG1-PG3) für wenigstens eine Anwendung der Speicherkarte enthält, in der der Festwertspeicher oder der Anwenderspeicher ein Interpretationsprogramm für die Ausführung von Speicherzugriffsbefehlen der Anwendungsprogramme enthält und in der hierzu die Befehle für den Zugriff auf eine bestimmte Adresse eines der Speicher der Karte die in einem Anwendungsprogramm des Anwenderspeichers vorhandenen Befehle vom interpretierbaren und nicht direkt ausführbaren Typ sind und geeignet sind, die Ausführung durch den Interpretierer eines Interpretationsunterprogramms auszulösen, das seinerseits enthält: Untersuchen einer Steuerzone (ZR) im Anwenderspeicher, wobei diese Zone für die Anwendungsprogramme die Freigaben des Zugriffs auf die verschiedenen Speicher sowie den Typ der freigegebenen Zugriffe definiert, Vergleichen des für eine gegebene Adresse geforderten Zugriffsbefehls mit der entsprechenden Freigabe, die in der Steuerzone (ZR) vorhanden ist, und Ausführen des Zugriffsbefehls ausschließlich dann, wenn die Freigabe für den geforderten Zugriffstyp und für die geforderte Adresse vorliegt.

2. Speicherkarte nach Anspruch 1, dadurch gekennzeichnet, daß die Steuerzone verschiedene Zugriffsfreigaben für mehrere verschiedene Zonen innerhalb jedes Speichers enthält.

3. Speicherkarte nach einem der Ansprüche 1 und 2, dadurch gekennzeichnet, daß das Betriebssystem ein Programm zum Laden von Anwendungsprogrammen enthält, wobei dieses Programm in den Anwenderspeicher (MU) außerhalb der Steuerzone ein neues Anwendungsprogramm schreiben kann und in die Steuerzone (ZR) Daten schreiben kann, die die Freigaben des Zugriffs auf die verschiedenen Speicher während der Ausführung des Anwendungsprogramms repräsentieren.

4. Speicherkarte nach einem der vorangehenden Ansprüche, dadurch gekennzeichnet, daß die Zugriffsfreigaben Lese-, Schreib- und/oder Ausführungsfreigaben umfassen.

5. Speicherkarte nach einem der vorangehenden Ansprüche, dadurch gekennzeichnet, daß die in der Steuerzone enthaltenen Freigabedaten ein Schreibverbot für die reservierte Zone bei Ausführung eines im Anwenderspeicher vorhandenen Anwendungsprogramms enthalten.

6. Verfahren zum Betreiben einer Mikroprozessor-Speicherkarte zum Ausführen von Anwendungsprogrammen (PG1, PG2, PG3), die in einem Anwenderspeicher (MU) enthalten sind, indem Betriebssystem-Programme (SYS) verwendet werden, die in einem System-Festwertspeicher (MSYS) enthalten sind, durch das jeder Befehl für den Zugriff auf einen der Speicher (MSY, MU, MT) der Karte, der in einem Anwendungsprogramm im Anwenderspeicher (MU) enthalten ist, durch ein im System-Festwertspeicher (MSYS) oder im Anwenderspeicher enthaltenes Interpretationsunterprogramm interpretiert wird, wobei dieses Unterprogramm eine Zugriffssteuerung gemäß dem angeforderten Befehl ausgehend von Zugriffsfreigabedaten, die wenigsten in einem Teil einer reservierten Zone (ZR) des Anwenderspeichers enthalten sind, ausführt und anschließend den Zugriff ausschließlich dann ausführt, wenn die Freigabedaten eine Zugriffsfreigabe enthalten, die dem angeforderten Zugriffstyp und der angeforderten Adresse entspricht.

7. Verfahren nach Anspruch 6, dadurch gekennzeichnet, daß das Anwendungsprogramm in den Anwenderspeicher außerhalb der Steuerzone mit Hilfe eines im System-Festwertspeicher enthaltenen Ladeprogramms geladen wird und daß die Daten der Steuerzone anhand des Ladeprogramms modifiziert werden, um die auf das Anwendungsprogramm bezogenen Freigabedaten in sie einzufügen.

8. Verfahren nach Anspruch 7, dadurch gekennzeichnet, daß die Daten der Steuerzone das Schreiben von das Schreiben in die Steuerzone freigebenden Daten in die Steuerzone während der Ausführung eines in den Anwenderspeicher geladenen Anwendungsprogramms verhindern.

## Claims

1. A memory card for a micro-processor, having at least one read-only system memory (MSYS) containing programmes of an operating system, and a non-volatile user memory (MU) containing data and programmes (PG1 - PG3) relating to at least one application of the memory card, in which the read-only memory or the user memory contains an interpreter programme to carry out memory accessing instructions for the application programmes and, to this end, the instructions for accessing one of the memories of the card at a desired address, these instructions being present in an application programme of the user memory, are of the type that are interpretable and not directly executable and will trigger the interpreter to run an interpreting sub-programme which consists in: examining a control area (ZR) in the user memory, this area defining the access authorisations to the different memories and the type of access authorised for the application programmes, comparing the access instruction requested for a given address with the corresponding authorisation given in the control area (ZR) and running the access instruction only if the authorisation exists for the type of access requested and for the address requested.

2. A memory card as claimed in claim 1, characterised in that the control area contains separate access authorisation for several different areas within each memory.

3. A memory card as claimed in one of claims 1 and 2, characterised in that the operating system contains a programme for loading application programmes, this programme being capable of writing a new application programme to the user memory (MU), outside of the control area, and of writing in the control area (ZR) data representing access authorisations to the different memories whilst the application programme is running.

4. A memory card as claimed in one of the preceding claims, characterised in that the access authorisations incorporate read, write and/or execute authorisations.

5. A memory card as claimed in one of the preceding claims, characterised in that the authorisation data contained in the control area prohibit writing in the reserved area when an application programme present in the user memory is running.

6. An operating method for a memory card for a micro-processor, for running application programmes (PG1, PG2, PG3) contained in a user memory (MU) using the operating system programmes (SYS) contained in a read-only system memory (MSYS), whereby each instruction pertaining to access to one of the memories (MSYS, MU, MT) of the card, such instruction being contained in an application programme in the user memory, is interpreted by an interpreting sub-programme contained in the read-only system memory (MSYS) or in the user memory (MU), whereby this sub-programme performs an access check for the requested instruction on the basis of access authorisation data contained at least in part in a reserved zone (ZR) of the user memory and the sub-programme then allows access only if the authorisation data contains an access authorisation corresponding to the type of access requested and at the address requested.

7. A method as claimed in claim 6, characterised in that an application programme is loaded into the user memory, outside of the control area, by means of a loading programme contained in the read-only system memory and the data of the control area are modified by the loading programme to include therein authorisation data relating to the application programme.

8. A method as claimed in claim 7, characterised in that the data of the control area prevent any data that would authorise writing in the control area from being written to the control area whilst an application programme loaded in the user memory is being run.
